# EUROPÄISCHE PATENTANMELDUNG

(11) **EP 0 751 525 A1**
(43) Veröffentlichungstag der Anmeldung: **02.01.1997**
(21) Anmeldenummer: 96109323.4
(22) Anmeldetag: 11.06.1996
(51) Int. Cl.: G11B 33/04

(54) **Aufklappbare Verpackung für einen flachen Gegenstand**

(30) Priorität: 21.06.1995 DE 19522509
(71) Anmelder: RAVENSBURGER AG, 88214 Ravensburg (DE)
(72) Erfinder: Kiderlen, Dieter, 88214 Ravensburg (DE)
(74) Vertreter: Goetz, Rupert, Dipl.-Ing.

(57) **Zusammenfassung**

Eine Verpackung für einen flachen Gegenstand, insbesondere einen scheibenförmigen Informationsträger, hat eine Hülle (10), die zwei Seitenteile (12, 14), einen die Seitenteile verbindenden Mantel (20) und eine offene Stirnseite aufweist, sowie einen parallel zu den Seitenteilen (12, 14) in die Hülle (10) ein- und aus ihr ausschwenkbaren Einschub (50), der ein Abdeckteil (52) und eine Haltewange (54) mit einer Halterung (74) für den zu verpackenden Gegenstand aufweist. Die Haltewange (54) ist gelenkig mit dem Abdeckteil (52) verbunden und bei geöffneter Verpackung in einer Richtung quer zu den Seitenteilen (12, 14) der Hülle (10) schwenkbar. Ein in eine derartige Verpackung eingelegter Gegenstand ist besonders bequem entnehmbar.

## Beschreibung

Die Erfindung betrifft eine Verpackung für einen flachen Gegenstand nach dem Oberbegriff von Anspruch 1. Bei dem Gegenstand handelt es sich insbesondere um einen scheibenförmigen Informationsträger, zum Beispiel um eine CD. Die Verpackung ist jedoch auch für andere Gegenstände geeignet, beispielsweise für Tonband- und Filmspulen, Kompakt- und Videokassetten, Spielpläne, Spielkartenpakete, Bücher und Broschüren sowie Behälter für Kleinmaterial.

Aus der DE 38 20 239 A1 ist eine Verpackung für scheibenförmige Produkte bekannt, die zwei im Abstand voneinander parallel angeordnete und im Randbereich miteinander verbundene Seitenteile und einen Produktträger aufweist. Das Produkt ist in einer Vertiefung des Produktträgers gehalten. Der Produktträger ist über eine quer zu den Seitenteilen verlaufende Achse mit diesen verbunden. Er kann zwischen einer Stellung, in der das Produkt vollständig durch die Seitenteile verdeckt ist, und einer Stellung, in der das Produkt freiliegt, verschwenkt werden. Der Produktträger und das Produkt sind dabei stets ungefähr parallel zu den Seitenteilen angeordnet.

Eine derartige Verpackung wird normalerweise, ebenso wie ein Buch, senkrecht in ein Regal gestellt. Dabei ergibt sich jedoch das Problem, daß das Produkt nicht bequem aus der Verpackung entnehmbar ist. Wenn sich die Verpackung in einer angenehmen Greifhöhe befindet, sieht der Benutzer das Produkt nur von schräg oben in einer starken perspektivischen Verkürzung. Überdies behindert der Produktträger den direkten Blick auf das in dessen Vertiefung angeordnete Produkt. Aus diesen Gründen ist es unbequem, das Produkt zu ergreifen, insbesondere, wenn das Produkt, wie eine CD, relativ flach ist und zur Vermeidung von Fingerabdrücken nur am Rand angefaßt werden soll.

Aus DE 88 07 960 U1 ist eine quaderförmige Faltschachtel bekannt, deren Zuschnitt vier gelenkig miteinander verbundene Wandabschnitte aufweist, an die ihrerseits Laschen angelenkt sind. In einer Ausführungsform der Faltschachtel werden beim Öffnen die an einer ihrer Schmalseiten angeordneten Laschen mit herausgeschwenkt und begrenzen die Entnahmeöffnung seitlich. Auch in der geöffneten Stellung der Faltschachtel liegen die Laschen an je einer Seitenwand der Faltschachtel an und überlappen sich mit dieser, so daß ein Herausklappen der Laschen in einer Richtung quer zu den Seitenwänden nicht möglich ist.

DE 92 07 336 U1 zeigt eine Faltschachtel mit Schütte, bei der Laschen vorgesehen sind, die die Schüttöffnung seitlich begrenzen, sich auch bei geöffneter Faltschachtel mit je einer Seitenwand überlappen und nicht in einer Richtung quer zu den Seitenwänden aufklappbar sind. Ein vorspringender Randabschnitt an je einem Ende der Laschen dient als Anschlag, um die maximale Öffnung der Faltschachtel zu begrenzen.

DE 1 815 376 A1 ist ein zusammenlegbarer Aktenordner bekannt, bei dessen Aufbau ein Reihe von Zungen in eine Reihe von Schlitzen eingeschoben werden, um dem Ordner Stabilität zu verleihen.

GB 2 271 343 A zeigt einen Behälter, bei dem eine Hülle und ein Einschub aus einem Kartonzuschnitt gebildet sind.

Die Erfindung hat daher die Aufgabe, eine Verpackung bereitzustellen, aus der der verpackte Gegenstand bequem entnommen werden kann. Die Verpackung soll den Gegenstand sicher halten und in der Herstellung kostengünstig sein.

Erfindungsgemäß wird diese Aufgabe durch eine Verpackung der eingangs genannten Art gelöst, bei der die Haltewange gelenkig mit dem Abdeckteil verbunden und bei geöffneter Verpackung in einer Richtung quer zu den Seitenteilen der Hülle schwenkbar ist.

Bei einer erfindungsgemäßen Verpackung, die wie ein Buch in einem Regal steht, sind im geschlossenen Zustand das Abdeckteil sowie die Haltewange für den zu verpackenden Gegenstand senkrecht angeordnet. Die Verpackung wird geöffnet, indem zunächst der Einschub in einer zu den Seitenteilen der Hülle parallelen Richtung verschwenkt wird. Sobald sich die Haltewange nicht mehr mit den Seitenteilen der Hülle überlappt (dies ist vorzugsweise dann der Fall, wenn das Abdeckteil eine waagrechte Lage einnimmt), kann die Haltewange in einer Richtung quer zu der bisherigen Schwenkbewegung aufgeklappt werden. Wenn auch die Haltewange in eine waagrechte Lage verschwenkt ist, kann der Benutzer den verpackten Gegenstand bequem sehen und ergreifen. Der Verpackung wird in umgekehrter Reihenfolge geschlossen.

Der dargestellte Bewegungsablauf kann auch von Kindern problemlos ausgeführt werden. Die Tatsache, daß sich der verpackte Gegenstand nach dem Öffnen der Verpackung dem Betrachter frontal präsentiert, ist verkaufspsychologisch ein wichtiger Vorteil.

Wegen des bei geschlossener Verpackung quer zu der Haltewange angeordneten Abdeckteils kann die Verpackung beliebig breit
dimensioniert werden, so daß dem an der Haltewange gehaltenen Gegenstand noch weitere Gegenstände beigelegt werden können. Bei aufgeklappter Verpackung verhindert das dann waagrechte Abdeckteil, daß diese weiteren Gegenstände ungewollt aus der Verpackung auf den Boden fallen.

Vorzugsweise ist die Haltewange mit einem seitlichen Rand des Abdeckteils gelenkig verbunden. Die Haltewange und das Abdeckteil können einstückig gestaltet sein. Wenn die Haltewange bei geschlossener Verpackung innen an einem der Seitenteile der Hülle anliegt, erhält die Verpackung eine größere Stabilität.

Außerdem wird dadurch das Abdeckteil geführt und bei geschlossener Verpackung versteift, so daß es die offene Stirnseite der Verpackung zuverlässig verschließt.

Der Einschub weist vorzugsweise zusätzlich eine Führungswange auf, die mit dem anderen seitlichen Rand des Abdeckteils verbunden ist und bei geschlossener Verpackung innen am anderen Seitenteil der Hülle anliegt. Dadurch wird die Stabilität der Verpackung weiter erhöht. Zusätzlich zu verpackende Gegenstände können zwischen die Halte- und die Führungswange eingelegt werden. Die Führungswange verhindert zuverlässig, daß solche Gegenstände bei geöffneter Verpackung ungewollt zu Boden fallen.

In einer bevorzugten Weiterbildung der Verpackung mit Führungswange ist an der Hülle ein Anschlag für eine Nase der Führungswange ausgebildet. Dadurch wird sicherstellt, daß sich auch bei geöffneter Verpackung die Führungswange und das entsprechende Seitenteil der Hülle teilweise überlappen, und es wird vermieden, daß die Verpackung weiter geöffnet wird, als dies für ein bequemes Ergreifen des verpackten Gegenstands erforderlich ist. Vorzugsweise beträgt der Verschwenkungswinkel des Einschubs zwischen seiner geschlossenen und seiner durch den Anschlag begrenzten maximal geöffneten Stellung ungefähr 90°. Wenn sich die Führungswange stets mit dem entsprechenden Seitenteil der Hülle zumindest teilweise überlappt, braucht sie beim Schließen der Verpackung nicht erst in die offene Stirnseite der Hülle eingeführt werden. Es ist nicht erforderlich, die Führungswange und das Abdeckteil starr miteinander zu verbinden. Eine gelenkige Verbindung, ähnlich der zwischen der Haltewange und dem Abdeckteil, reicht aus, um für eine hinreichende Stabilität der Verpackung zu sorgen. Die Führungswange, die Haltewange und das Abdeckteil können aus einem einzigen Materialstück bestehen.

Um der Verpackung insbesondere während des Öffnens und Schließens noch größere Stabilität zu verleihen, sind vorzugsweise die Haltewange und die Führungswange zwischen je einem der Seitenteile und je einer Reihe von Erhebungen geführt, die vom Mantel der Hülle nach innen ragen.

Vorzugsweise sind die Seitenteile sowie die Wangen der Verpackung ungefähr viertelkreisförmig. Diese Gestaltung gewährleistet, daß die Wangen während des Auf- und Zuklappens der Verpackung an ihrem gesamten Rand, soweit sie sich mit den Seitenteilen überlappen, geführt werden. Außerdem verleiht diese Gestaltung der Verpackung ein charakteristisches und der Funktionsweise entsprechendes Aussehen.

Vorzugsweise weist der Mantel der Hülle zwei Mantelteile auf, von denen eines in der Seitenansicht dem Kreisbogen der viertelkreisförmigen Seitenteile und das andere einem den Viertelkreis abschließenden Radius entspricht. Die offene Stirnseite der Hülle ist entlang des anderen den Viertelkreis abschließenden Radius angeordnet. In dieser Ausgestaltung ist das Abdeckteil mit dem flachen Mantelteil der Hülle an der Stelle verbunden, die in der Seitenansicht dem Mittelpunkt des durch den Kreisbogen des gekrümmten Mantelteils definierten Kreises entspricht. Das Abdeckteil und die Hülle können einstückig ausgebildet sein.

Bevorzugt weisen die beiden Seitenteile der Hülle an dem die offene Stirnseite begrenzenden Rand je eine Aussparung auf, die
es erleichtert, das Abdeckteil an seinen seitlichen Rändern zu ergreifen und die Verpackung zu öffnen.

Die Halterung für den flachen scheibenförmigen Gegenstand weist bevorzugt eine ungefähr kreisförmige Vertiefung an einer der Führungswange zugewandten Seite der Haltewange sowie Haltezungen auf. Dadurch wird der kreisförmige Gegenstand sicher gehalten und vor Beschädigungen geschützt. Die kreisförmige Vertiefung ist an ihrem Rand mit einer Ausnehmung versehen, durch die der kreisförmige Gegenstand bequem ergriffen werden kann. Die Halterung kann aus einem auf die Haltewange aufgeklebten zusätzlichen Materialstück bestehen.

Die Verpackung ist vorzugsweise für interaktive Spiele vorgesehen, bei denen das Spielmaterial eine CD-ROM sowie eine Spielanleitung und gegebenenfalls weitere Materialien enthält. Daher weist die Verpackung zwischen der Halte- und der Führungswange vorzugsweise Raum für solche weiteren Gegenstände auf.

Besonders kostengünstig und umweltfreundlich ist die Herstellung der Verpackung aus Pappe, insbesondere Wellpappe, oder Karton. Die gesamte Verpackung kann - gegebenenfalls mit Ausnahme der Halterung für den zu verpackenden Gegenstand - aus einem einzigen Kartonzuschnitt gefertigt sein. Die gelenkigen Verbindungen werden durch geprägte Scharnierabschnitte im Kartonzuschnitt gebildet. Die Verpackung kann aber auch aus anderen Werkstoffen, beispielsweise aus Kunststoff, bestehen. Auch eine Kunststoffverpackung kann einstückig gefertigt sein, wobei die gelenkigen Verbindungen von Scharnierabschnitten gebildet sind.

Bevorzugt ist die Verbindung zwischen den Seitenteilen der Hülle und dem Mantel dadurch gebildet, daß Verbindungslaschen an den Seitenteilen der Hülle in Schlitze des Mantels eingesteckt sind. Bei dieser Ausgestaltung brauchen keine Klebungen am Mantel der Verpackung vorgesehen werden.

Ein Ausführungsbeispiel der Erfindung wird anhand schematischer Zeichnungen genauer beschrieben. Es stellen dar:
- Fig. 1: eine perspektivische Ansicht einer geöffneten erfindungsgemäßen Verpackung,
- Fig. 2: eine perspektivische Ansicht der geschlossenen Verpackung von Fig. 1, und
- Fig. 3: eine Draufsicht auf einen Wellpappenzuschnitt, aus dem die in Fig. 1 und 2 gezeigte Verpackung gefaltet wird.

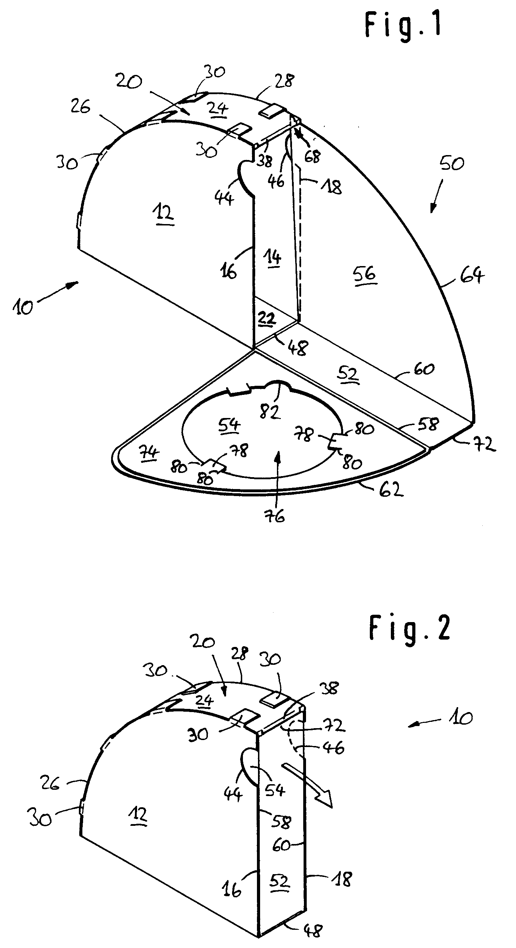

Die in Fig. 1 und 2 gezeigte Verpackung weist eine Hülle 10 mit zwei flachen, viertelkreisförmigen Seitenteilen 12, 14 auf, die parallel und mit Abstand voneinander angeordnet sind. Die Seitenteile 12, 14 sind, mit Ausnahme einer von zwei parallelen Rändern 16 und 18 seitlich begrenzten offenen Stirnseite, durch einen Mantel 20 miteinander verbunden. Der Mantel 20 weist ein flaches, rechteckiges Mantelteil 22 auf, sowie ein gekrümmtes Mantelteil 24, das entlang kreisbogenförmiger Ränder 26 bzw. 28 der Seitenteile 12 bzw. 14 angeordnet ist.

Entlang der Ränder 26 und 28 weisen die Seitenteile 12 und 14 Verbindungslaschen 30 auf, die nahe der Ränder 26 und 28 in flache Ausnehmungen 32 des gekrümmten Mantelteils 24 eingreifen, dann auf der Außenfläche des Mantelteils 24 zu Schlitzen 34 geführt und in diese eingesteckt sind. Die Verbindungslaschen 30 haben abgerundete Enden 36, die als Erhebungen aus den Schlitzen 34 nach innen hervorragen.

Die offene Stirnseite der Verpackung wird oben von einem umgebogenen Rand 38 des bogenförmigen Mantelteils 24 begrenzt, an den ein Anschlagstück 40 anschließt, das nach innen um Abstandslaschen 39 der Seitenteile 12 und 14 umgeschlagen ist und eine nach innen weisende Kante 42 aufweist.

Die geraden Ränder 16 bzw. 18 der Seitenteile 12 bzw. 14 weisen in ihrem oberen Drittel je eine halbkreisförmige, etwa daumengroße Ausnehmung 44, 46 auf.

Das flache Mantelteil 22 ist an seiner vorderen Schmalseite 48 gelenkig mit einem ein- und ausschwenkbaren Einschub 50 verbunden, genauer mit einem rechteckigen Abdeckteil 52 des Einschubs 50, das in seiner Form und Größe etwa dem flachen Mantelteil 22 entspricht. Der Einschub 50 weist weiter eine Haltewange 54 und eine Führungswange 56 auf, die gelenkig mit je einem der seitlichen Ränder 58 und 60 des Abdeckteils 52 verbunden sind. Die Führungswange 56 ist ungefähr viertelkreisförmig, während die Haltewange 54 einen etwas kleineren Kreissektor einnimmt. Die Radien der Haltewange 54 und der Führungswange 56 sind nur geringfügig kleiner als die der Seitenteile 12 und 14, so daß bogenförmige Ränder 62 bzw. 64 der Wangen 54 bzw. 56 bei geschlossener Verpackung innen am gekrümmten Mantelteil 24 beinahe anliegen. Die Enden 36 der nach innen durch die Schlitze 34 eingesteckten Verbindungslaschen 30 überlappen sich mit den Wangen 54 und 56, so daß die Wangen 54 und 56 zwischen je einer der Seitenwände 12 und 14 sowie je einer Reihe von durch die Enden 36 gebildeten Erhebungen geführt sind.

Die Führungswange 56 weist an ihrer nicht mit dem Abdeckteil 52 verbundenen Ecke 66 eine Nase 68 mit einer Kante 70 auf; das Abdeckteil 52 hat einen etwas vorstehenden Rand 72.

Auf der Innenseite der Haltewange 54 ist eine Halterung 74 in Form eines gestanzten Pappstücks aufgeklebt. Eine ungefähr kreisförmige Aussparung in diesem Pappstück bildet eine Vertiefung 76, die den zu verpackenden Gegenstand, der ungefähr die Dicke des Pappstücks aufweist, aufzunehmen vermag.

Der Gegenstand wird in der Vertiefung 76 durch drei Haltezungen 78 gehalten, die einstückig mit dem Pappstück ausgebildet und von seitlichen Einschnitten 80 begrenzt sind, so daß sich
die Haltezungen 78 leicht aus der Ebene des Pappstücks biegen lassen. Eine halbkreisförmige, etwa daumengroße Ausbuchtung 82 der Vertiefung 76 erleichtert das Ergreifen des verpackten Gegenstands.

Die in Fig. 2 gezeigte geschlossene Verpackung wird geöffnet, indem das Abdeckteil 52 zwischen den Ausnehmungen 44 bzw. 46 der Seitenteile 12 bzw. 14 seitlich ergriffen und in Richtung des in Fig. 2 gezeigten Pfeils verschwenkt wird. Wenn der Einschub 50 so weit aus der Hülle 10 ausgeschwenkt ist, daß sich das Abdeckteil 52 in einer Ebene mit dem flachen Mantelteil 22 befindet, liegt die Kante 70 der Nase 68 an der Kante 42 des Anschlagsstücks 40 an und verhindert ein weiteres Ausschwenken des Einschubs 50. Dadurch ist sichergestellt, daß sich die Führungswange 56 stets zumindest teilweise mit dem Seitenteil 14 überlappt, so daß der Einschub 50 ausreichend geführt bleibt. Nun wird die Haltewange 54 ausgeklappt, also aus ihrer bisherigen senkrechten, zum Seitenteil 12 parallelen Stellung in die in Fig. 1 gezeigte waagerechte Stellung verschwenkt. Der in die Halterung 74 eingelegte Gegenstand sowie weitere Gegenstände, die sich bei geschlossener Verpackung zwischen den Wangen 54 und 56 befinden, können nun bequem entnommen werden.

Die Verpackung wird in umgekehrter Reihenfolge geschlossen. Bei geschlossener Verpackung liegt der vorspringende Rand 72 des Abdeckteils 52 am umgebogenen Rand 38 des gekrümmten Mantelteils 24 an und wirkt als Anschlag, der ein zu weites Einschwenken des Einschubs 50 in die Hülle 10 verhindert. Außerdem kann der vorspringende Rand 72 auch als zusätzlicher Griffrand beim Öffnen der Verpackung dienen.

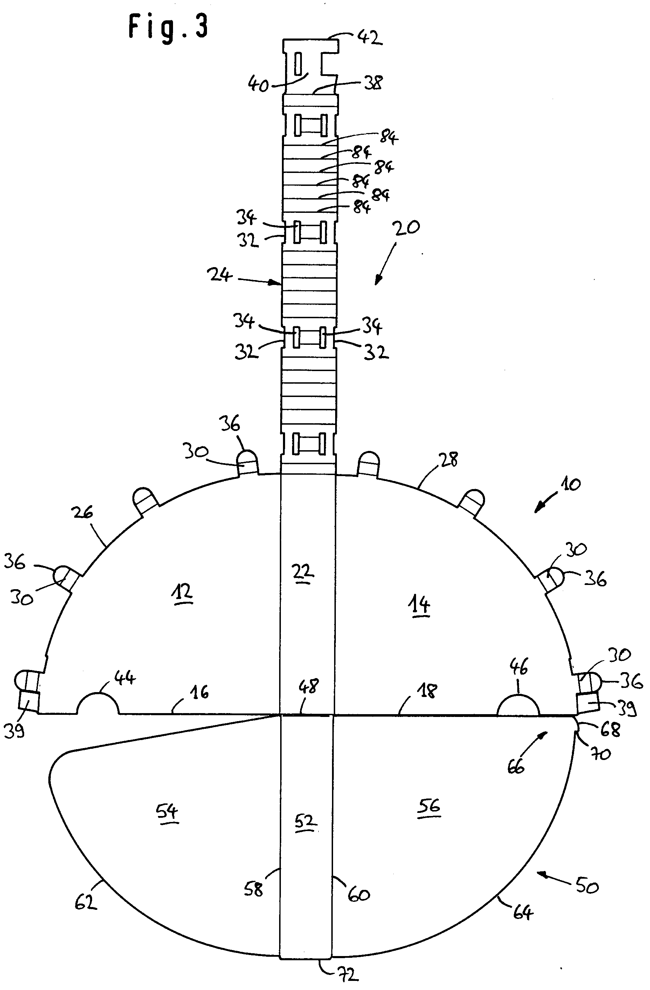

Wie in Fig. 3 gezeigt, sind die Hülle 10 und der Einschub 50 in der beschriebenen Ausführungsform aus einem einzigen Wellpappenzuschnitt gefertigt. Die gelenkigen Verbindungen an der Schmalseite 48 und den Rändern 58 und 60 sind durch geprägte Scharnierabschnitte der Wellpappe gebildet. Das gekrümmte Mantelteil 24
weist eine Vielzahl von Falzprägungen 84 auf, die beim Herstellen der Verpackung bewirken, daß das Mantelteil 24 der Krümmung der Ränder 26 und 28 ohne größere Knicke folgt. Die Verbindung zwischen den Seitenteilen 12 und 14 sowie dem gekrümmten Mantelteil 24 über die Verbindungslaschen 30 ist auch ohne eine zusätzliche Verklebung stabil; dennoch kann eine solche Verklebung vorgesehen sein. Das umgebogene Anschlagstück 40 muß nicht mit der Innenseite des gekrümmten Mantelteils 24 oder den Abstandslaschen 39 verklebt sein, weil es von den bogenförmigen Rändern 62 bzw. 64 der Wangen 54 bzw. 56 in seiner Lage gehalten wird. Wegen der stärkeren Belastung ist hier jedoch eine punktuelle Verklebung sinnvoll.

In einer Ausführungsalternative ist das Anschlagstück 40 halbkreisförmig ausgestaltet und ragt nur ungefähr bis zur Breite der Abstandslaschen 38 in die Hülle 10 hinein.

Die Verpackung kann beliebig bedruckt oder mit bedrucktem Papier beklebt sein. Zwischen dem Abdeckteil 52 und der Hülle 10 kann ein Siegelaufkleber vorgesehen sein, der dem Kunden die Unversehrtheit und Vollständigkeit des Inhalts garantiert und beim ersten Öffnen der Verpackung reißt.

## Patentansprüche

1. Verpackung für einen flachen Gegenstand, insbesondere einen scheibenförmigen Informationsträger, mit
- einer Hülle (10) mit zwei parallel zueinander angeordneten und ungefähr gleich geformten Seitenteilen (12, 14), einem die Seitenteile verbindenden Mantel (20) und einer offenen Stirnseite, und
- einem parallel zu den Seitenteilen (12, 14) in die Hülle (10) ein- und aus ihr ausschwenkbaren Einschub (50) mit einem gelenkig mit der Hülle (10) verbundenen Abdeckteil (52), das bei geschlossener Verpackung die Stirnseite der Hülle (10) verschließt, und mit einer Haltewange (54), die bei geschlossener Verpackung quer zu dem Abdeckteil (52) zwischen den beiden Seitenteilen (12, 14) der Hülle (10) angeordnet ist und eine Halterung (74) für den zu verpackenden Gegenstand aufweist,
dadurch gekennzeichnet, daß
- die Haltewange (54) gelenkig mit dem Abdeckteil (52) verbunden und bei geöffneter Verpackung in einer Richtung quer zu den Seitenteilen (12, 14) der Hülle (10) aufklappbar ist.

2. Verpackung nach Anspruch 1,
dadurch gekennzeichnet, daß die Haltewange (54) mit einem seitlichen Rand (58) des Abdeckteils (52) gelenkig verbunden ist und bei geschlossener Verpackung innen an einem der Seitenteile (12) der Hülle (10) anliegt, und daß der Einschub (50) zusätzlich eine Führungswange (56) aufweist, die mit dem anderen seitlichen Rand (60) des Abdeckteils (52) verbunden ist und bei geschlossener Verpackung innen am anderen Seitenteil (14) der Hülle (10) anliegt.

3. Verpackung nach Anspruch 2,
dadurch gekennzeichnet, daß an der Hülle (10) ein Anschlag für eine Nase (68) der Führungswange (56) ausgebildet ist, der sicherstellt, daß sich auch bei geöffneter Verpackung die Führungswange (56) und das entsprechende Seitenteil (14) der Hülle (10) teilweise überlappen.

4. Verpackung nach Anspruch 2 oder 3,
dadurch gekennzeichnet, daß die Haltewange (54) und die Führungswange (56) zwischen je einem der Seitenteile (12, 14) und je einer Reihe von Erhebungen geführt sind, die vom Mantel (20) der Hülle (10) nach innen ragen.

5. Verpackung nach einem der Ansprüche 1 bis 4,
dadurch gekennzeichnet, daß die Seitenteile (12, 14) und Wangen (54, 56) ungefähr viertelkreisförmig sind.

6. Verpackung nach Anspruch 5,
dadurch gekennzeichnet, daß der Mantel (20) zwei Mantelteile (22, 24) aufweist, von denen eines (24) in der Seitenansicht dem Kreisbogen der viertelkreisförmigen Seitenteile (12, 14) und das andere (22) einem den Viertelkreis abschließenden Radius entspricht, wobei die offene Stirnseite der Hülle (10) entlang dem anderen den Viertelkreis abschließenden Radius angeordnet ist.

7. Verpackung nach einem der Ansprüche 2 bis 6,
dadurch gekennzeichnet, daß die Halterung (74) für einen flachen scheibenförmigen Gegenstand, insbesondere eine CD, eine ungefähr kreisförmige Vertiefung (76) an einer der Führungswange (56) zugewandten Seite der Haltewange (54) und Haltezungen (78) aufweist.

8. Verpackung nach Anspruch 7,
dadurch gekennzeichnet, daß zwischen der Halte- und der Führungswange (54, 56) Raum für weitere Gegenstände, insbesondere für ein Buch oder Spielmaterial, freigelassen ist.

9. Verpackung nach einem der Ansprüche 1 bis 8,
dadurch gekennzeichnet, daß die Hülle (10) und der Einschub (50) aus einem Kartonzuschnitt gefaltet sind.

10. Verpackung nach einem der Ansprüche 1 bis 9,
dadurch gekennzeichnet, daß an den Seitenteilen (12, 14) der Hülle (10) Verbindungslaschen (30) ausgebildet sind, die in Schlitze (34) des Mantels (20) eingesteckt sind.
